# EUROPÄISCHE PATENTANMELDUNG

(11) **EP 4 321 328 A1**
(43) Veröffentlichungstag der Anmeldung: **14.02.2024**
(21) Anmeldenummer: 22189750.7
(22) Anmeldetag: 10.08.2022
(51) Int. Cl.: B29C 70/22, H02K 3/02, B32B 1/08

(54) **TEXTILES HALBZEUG, BAUTEIL DARAUS SOWIE VERWENDUNG DAVON UND ELEKTRISCHE ROTIERENDE MASCHINE**

(71) Anmelder: Siemens Mobility GmbH, 81739 München (DE)
(72) Erfinder: Adam, Christoph, 90411 Nürnberg (DE); Finck, David, 91301 Forchheim (DE); Frischholz, Thomas, 97705 Burkardroth - Katzenbach (DE); Hönisch, Benedikt, 91301 Forchheim (DE); Johannes, Martin, 91058 Erlangen (DE); Körner, Olaf, 90469 Nürnberg (DE); Ntourmas, Felix, 91052 Erlangen (DE); Seidel, Christian, 91083 Baiersdorf (DE); Stapfner, Johann, 90547 Stein (DE); Wetzel, Wolfgang, 91074 Herzogenaurach (DE)
(74) Vertreter: Siemens Patent Attorneys

(57) **Zusammenfassung**

Die Erfindung betrifft ein textiles Halbzeug, also Fasern, insbesondere Verstärkungsfasern, wie sie vor der Herstellung des Bauteils vorliegen, ein Bauteil daraus und dessen Verwendung bei der Herstellung von elektrischen rotierenden Maschinen, beispielsweise Elektromotoren. Durch die spezielle Art der textilen Faserlegung können Bauteile mit Rundungen, wie z.B. scheibenförmige, zylindrische, kreisförmige, ovale und/oder wannenförmige Bauteile, nahezu Verschnitt-frei produziert werden. Das bewirkt eine verbesserte Ökobilanz und reduziert die Kosten. Es wird außerdem eine lastflussgerechte Faserpositionierung bei den genannten Bauteilen ermöglicht.

## Beschreibung

Die Erfindung betrifft ein textiles Halbzeug, also Fasern, insbesondere Verstärkungsfasern, wie sie vor der Herstellung des Bauteils vorliegen, ein Bauteil daraus und dessen Verwendung bei der Herstellung von elektrischen rotierenden Maschinen, beispielsweise Elektromotoren.

Textile Halbzeuge sind bekannt und werden als Vormaterial für faser-verstärkte Verbundwerkstoffe eingesetzt. Dabei liegen die Fasern einzeln, unidirektional, als Bündel, als Rovings, als Gewebe mit verschiedensten Maschengrößen und schließlich auch als Verbund von Geweben und/oder in Form von Gelegen vor. Die Anordnung der Fasern bildet dabei das textile Halbzeug. Das textile Halbzeug wird zur Herstellung eines Bauteils mit einem duromeren Reaktionsharz, insbesondere einem duromeren Reaktionsharz auf Epoxidbasis, getränkt, gefüllt und/oder damit imprägniert und/oder injiziert, so dass bevorzugt ein Bauteil in Form eines möglichst Lunker-freien, also von Hohlräumen freien Formkörpers vorliegt.

Duromere Reaktionsharze - wie sie in den Bauteilen vorliegen sind aus einer hochviskosen, jedoch nicht zwingend voll durch-polymerisierten duroplastischen Kunststoffmatrix, die im Leichtbau Verwendung findet.

Leichtbauweise ist eine Konstruktionsphilosophie, die sowohl die Gewichtseinsparung als auch die Steigerung des Ressourceneffizienz zum Ziel hat. Die Motivation für den Leichtbau kann verschiedener Natur sein.

Ziel des Leichtbaus ist die Einsparung von Roh-und/oder Werkstoffen, Kosten und Energie bei der Herstellung, Nutzung und Verwertung eines Produkts. Insbesondere bei der bewegten Masse, also Straßen- und Schienenfahrzeuge, Elektromotoren, Antriebe, Aufzüge, Roboterarme, Maschinenkomponenten etc. können durch Leichtbau die Betriebskosten reduziert und/oder die Nutzlast erhöht werden. So ist bei Fahr- und Flugzeugen eine geringere Antriebsleistung für die gleichen Fahr- respektive Flugeigenschaften notwendig, gleichzeitig sinkt der Kraftstoffverbrauch und das Verhältnis von Fahrzeug- zu Frachtgewicht verbessert sich.

Faserverstärkte Verbundwerkstoffe, kurz -FVK- sind klassische Leichtbaumaterialien. Die Nachfrage nach Leichtbaumaterialien ist allein von 2002 bis 2007 um 300% gestiegen. FVKs sind Werkstoffe aus Verstärkungsfasern und Kunststoffmatrix. Die Matrix umgibt dabei die Fasern, die durch adhäsive Wechselwirkung an die Matrix gebunden sind.

FKVs zeigen hohe spezifische Steifigkeiten, wie z.B. Biege-, Dehn- und/oder Torsionssteifigkeit und auch hohe Festigkeiten. Zur Herstellung eines Faser-Verbundwerkstoffes

Die Fasern im textilen Halbzeug können als reine unidirektionale Schicht, als Gewebe und/oder als Gelege vorliegen. Die textilen Halbzeuge liegen in der Regel zweidimensional als flächige Werkstoffe oder auch dreidimensional als Vorformlinge vor. Die duroplastische Matrix befindet sich im Bauteil im vollvernetzten Zustand.

Es gibt auch textile Halbzeuge, die keine Endlosfasern, sondern - zumindest auch - kürzere Fasern zur Verstärkung enthalten, beispielsweise so genannte "BMC" Bulk Molding Compounds oder "SMC" Sheet Molding Compounds. Diese Composites finden verstärkt in der Fahrzeugindustrie, wie z.B. Zügen und/oder Automobilindustrie Einsatz, wohingegen in der Luftfahrt und Militärtechnik eher Composites in Form von textilen Halbzeugen mit Endlosfasern eingesetzt werden.

Textile Halbzeuge, ebenso wie BMCs und SMCs werden in der Regel als flächige Halbzeuge verarbeitet. In der klassischen Composite-Technologie entstammen die Halbzeuge der Spritzpresstechnologie, bei welcher kurz-, lang- und/oder Endlos-Faserverstärkte Composites in Duroplast-Spritzgusspressen verarbeitet werden. Für hohe strukturelle Anwendungen werden auch Endlosfaser-Composites über Harzinjektion, "RTM" = Resin Transfer Moulding, Nasspressen und/oder im Autoklav-Verfahren verarbeitet. Als textile Halbzeuge werden -wie bereits beschrieben - dafür Gewebe und/oder Gelege verwendet.

Der Bedarf an hochleistungsfähigen Bauteilen aus innovativen Faserverbundwerkstoffen, insbesondere beim Traktionsmotorbau, in der Generatortechnik und auch insbesondere beim Elektromotorbau, wächst kontinuierlich an.

Daher ist es Aufgabe der vorliegenden Erfindung, eine weitere Technik zur Herstellung neuer hochleistungsfähiger innovativer Faserverbundwerkstoffe, insbesondere für scheibenförmige, zylindrische, kreisförmige, ovale und/oder wannenförmige Bauteile wie sie häufig in elektrischen rotierenden Maschinen vorkommen, zu schaffen.

Diese Aufgabe wird durch den Gegenstand der vorliegenden Erfindung, wie in der Beschreibung, den Figuren und den Ansprüchen offenbart, gelöst.

Dementsprechend ist Gegenstand der vorliegenden Erfindung ein textiles Halbzeug aus einem Reaktionsharz mit Faserfüllung, wobei die Fasern in der Matrix zumindest zum Teil radial, kreisförmig und/oder tangential verlaufen.

Allgemeine Erkenntnis der Erfindung ist es, dass in einem herkömmlichen textilen Halbzeug, bei dem die Verstärkungsfasern in klassischem Gelege und/oder Gewebe vorliegen, also vorzugsweise "gerade" und/oder im rechten Winkel verlaufen, die Herstellungseffizienz durch Drapieren und/oder lastflussgerechtes Auslegen der bevorzugten Faserorientierung des Halbzeugs unter Einbeziehung von radialem und/oder tangentialem Verlegen der Verstärkungsfasern deutlich gesteigert werden kann.

Zur Herstellung eines Bauteils wird zunächst das textile Halbzeug hergestellt, insbesondere gewoben und dann mit einer Harzmatrix imprägniert und/oder Harz in das textile Halbzeug injiziert. Die Harzmatrix kann beispielsweise ein Reaktionsharz oder ein Reaktionsharzgemisch, beispielsweise aus Epoxidharz, ungesättigte Polyester, Vinyletherharz und/oder Vinylesterharz, einen Härter, wiederum beispielsweise aminische, peroxidische und/oder anhydridische Verbindungen, umfassend und zusätzlich optional einen Katalysator enthalten.

Herkömmliche textile Halbzeuge sind beispielsweise Gelege, die aus Geweben, also Flächengebilden aufgebaut sind, die eine oder mehrere Lagen von parallel verlaufenden Endlosfasern umfassen, wobei die Fasern Lage auf Lage um einen definierten Winkel gedreht sein können, so dass eine Gitterstruktur mit definierten Maschen entsteht. Die Fadenlagen bei mehrlagigen Gelegen können unterschiedliche Orientierung aufweisen, sind aber immer parallel oder in parallelen Bündeln gewoben.

Herkömmliche Gewebe sind Flächengebilde, jedoch aus mindestens zwei Fadensystemen, Kette und Schuss, die sich in der Sicht auf die Gewebefläche unter einem Winkel von ca. 90° annähernd mustermäßig kreuzen. Dabei verlaufen die Kettfäden in Längsrichtung des Gewebes, also parallel zur Gewebekante und die Schussfäden in Querrichtung dazu, parallel zum Geweberand.

Die Verstärkungsfasern können auch unidirektional also in parallelen Linien verlaufen.

Bei textilen Halbzeugen in Form von Geweben und/oder Gelegen können die jeweiligen textilen Halbzeuge aus gleichen oder unterschiedlichen Fasern hergestellt sein. Es können auch Bündel und/oder Rovings aus gleichen oder unterschiedlichen Fasern zum Aufbau textiler Halbzeuge genutzt werden.

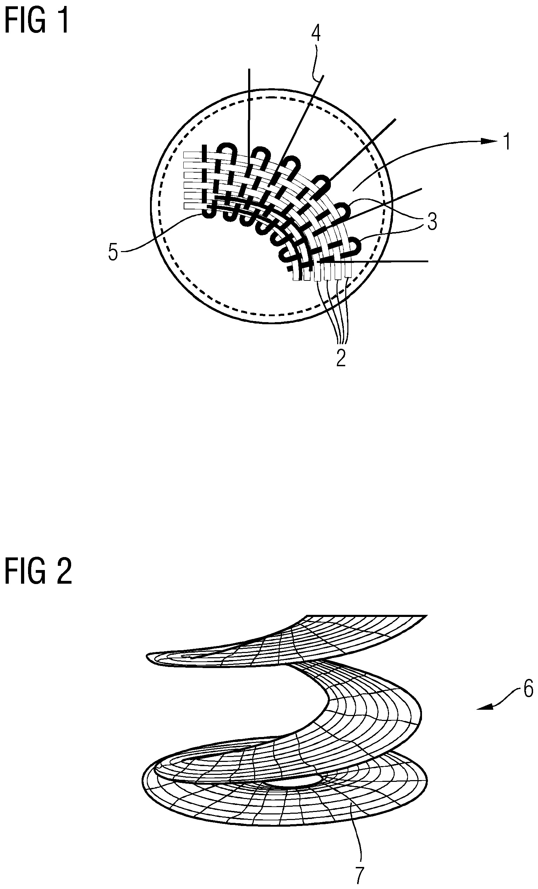

Nach einer vorteilhaften Ausgestaltung der Erfindung orientiert sich zumindest ein Teil der Verstärkungsfasern an einer scheibenförmigen Projektion eines daraus herzustellenden Bauteils- siehe Figur 1.

Aus dem textilen Halbzeug kann vorteilhafterweise auch eine Art Endlos-Spirale gefertigt werden, welche - nach einer zusätzlich vorteilhaften Ausführungsform - beispielsweise endlos als Laufband-Ware gestapelt und gleichzeitig gerollt - siehe Figur 2 - vorliegt und aus der dann bei der Fertigung von scheibenähnlichen Bauteilen und/oder Strukturen, wie Lagerschilde, das Bauteil schnell, einfach und prozesseffizient herstellbar ist.

Die Orientierung der Verstärkungsfaser an einer scheibenförmigen Projektion des Bauteils funktioniert nach dem Prinzip des Schattenrisses. Zur Legung der Fasern zur Herstellung eines textilen Halbzeugs für ein Lagerschild, beispielsweise, wird zunächst eine scheibenförmige Projektion des Lagerschilds erstellt, diese als Vorlage genutzt und die textile Verstärkung für das textile Halbzeug daran ausgerichtet. So entsteht beispielsweise das textile Halbzeug für ein Lagerschild. Dieses wird dann mit Harz getränkt, imprägniert, besprüht, wobei ein Bauteil entsteht. Die Imprägnierung mit Reaktionsharz kann sowohl vor der Formung zum Bauteil als auch nach der Formung zum Bauteil erfolgen. Im fertigen Bauteil ist immer Reaktionsharz vorhanden.

Diese textilen Halbzeuge bringen für scheibenförmige, zylindrische, kreisförmige, ovale und/oder wannenförmige Bauteile, die im Leichtbau und/oder mit struktureller Performance realisiert werden, Vorteile bei der Produktionseffizienz, weil mit diesen textilen Halbzeugen die Form dieser speziellen Bauteile über einfaches Drapieren herstellbar ist. Textile Halbzeuge im Sinne der vorliegenden Erfindung werden im Gegensatz zu den bekannten Geweben und Gelegen als "Spiralpreforms" und/oder "Radialpreforms" bezeichnet.

Die textilen Halbzeuge können auch als Laminate mit Spacerschaum verbunden vorliegen. Dies ist insbesondere vorteilhaft zur Erzielung hoher Leichtbaupotentiale bei beigebelasteten Strukturen, dies wird im Faserverbundbereich allgemein "Sandwichstruktur" genannt. Derartige Strukturen umfassen zumindest eine Schaum- und/oder Abstandsgewebekern-Komponente.

Als Schaum- und/oder Abstandsgewebekern-Komponente wird beispielsweise ein Spacerschaum bezeichnet. Spacerschaum wird vor dem Reaktionsharz in das spiralförmige textile Halbzeug ein- und/oder aufgebracht. Als Spacerschaum eignen sich beispielsweise Polyurethan, Polyester und/oder Polymethacrylimid.

Andere Schaum- und/oder Abstandsgewebekern-Komponenten sind bekannt und können unabhängig von der Art der Faserlegung im textilen Halbzeug, die Gegenstand der vorliegenden Erfindung ist, von allen bekannten Leichtbau-Materialien im Sinne der vorliegenden Beschreibung übernommen werden.

Die Belastbarkeit des Leichtbauteils aus einem textilen Halbzeug gemäß vorliegender Erfindung wird durch eine lastflussgerechte Faserorientierung erzeugt. Bei den Radialpreforms werden die Fasern nach einer vorteilhaften Ausführungsform derart orientiert, dass sie besonders wirksam die Hauptlastflussrichtungen abbilden. Da erfahrungsgemäß bei dreidimensionalen Bauteilen häufig verschiedene Lastrichtungen dominieren, konnten mit herkömmlichen 0°-90°-Gelegen und/oder - Geweben bisher nur durch Einsatz dickerer und damit schwererer Laminate, z.B. mit orthotropen und/oder quasiisotropem Lagenaufbau, kegelförmige, scheibenförmige, zylindrische, kreisförmige, ovale und/oder wannenförmige Bauteile im Leichtbau realisiert werden.

Ein Anwendungsbeispiel sind Lagerschilde für E-Motoren und/oder Wannen-, Scheiben- und/oder kegelförmige Gehäuse. Wesentliches technisches Merkmal dabei ist, dass die Verstärkungsfasern nicht wie in einem herkömmlichen textilen Halbzeug waagrecht und senkrecht orientiert sind, sondern dem Schattenriss der scheibenförmigen Projektion des Bauteils nachgelegt sind. Dabei entsteht ein Gewebe, das durch eine spezielle Führung des Webprozesses den Schattenriss nachzeichnen. Die Textilstruktur des textilen Halbzeugs ist damit unabhängig von der Art der Reaktionsharzeinbringung.

Ein so hergestelltes textiles Halbzeug ist zwar im Grunde flächig, also 2-dimensional, windet sich aber wie eine endlose Spirale um die eigene Achse - siehe Figur 2. Vorzugsweise wird die Lagenanzahl der Windungen bei der Herstellung entsprechend der Bauteildicke und/oder Lagendicke angepasst.

Nach einer vorteilhaften Ausführungsform liegt das textile Halbzeug in Sandwich-Struktur mit zwei oder mehreren Laminaten, vor.

Dabei ist beispielsweise vorgesehen, dass die Laminate durch Spacerschaum verbunden sind.

Als Fasern kommen alle möglichen Typen zum Einsatz, beispielsweise Glasfasern, Basaltfasern, Kohlenstofffasern, hochmodulige Kohlenstofffasern, Aramidfasern.

Im textilen Halbzeug liegen nach einer vorteilhaften Ausführungsform der Erfindung unterschiedliche Fasern, also ein Fasergemisch, vor. Die Unterschiedlichkeit der Fasern kann sich - beispielsweise - auf deren Material, deren Faserstärke, deren Faserart, deren Faserlänge und/oder deren Faserbündel beziehen. Jedenfalls kann es sich um ein Fasergemisch handeln. Diese Mischung kann statistisch oder periodisch sein. Diese Mischung kann sich auf tangential, radial, weiter innen oder weiter außen in Bezug auf die Spiralachse, etc. beziehen. Alle möglichen Gemische, Kombinationen und/oder Faserarten, solange sie tangential und/oder radial gelegte Fasern zeigen, sollen vom Umfang der hier beschriebenen Erfindung umfasst sein.

Beispielsweise kann durch die Wahl eines Fasergemisches eine multiphysikalische Eigenschaftsanpassung aus Mechanik, thermischem Ausdehnungskoeffizienten, sowie Angleichung der thermischen und elektrischen Leitfähigkeit erfolgen. Ein weiterer Punkt ist die Anpassung der thermischen Ausdehnung der verschiedenen Faserfraktionen.

Durch eine geeignete Auswahl der Fasern für die einzelnen Faserfraktionen kann auch die thermische Ausdehnung des herzustellenden Composite-Bauteils eingestellt respektive maßgeschneidert werden. Dies ist insbesondere vorteilhaft, wenn ein Composite-Bauteil mit einem weiteren Bauteil aus einem anderen Material, beispielsweise Metall, im Verbund ein Produkt ergibt. Beispielsweise wird ein Lagerschild einer elektrischen rotierenden Maschine mit einer metallischen Restkonstruktion verbunden. Liegen reine Glasfaser- oder Kohlenstofffaser-Compositelösungen vor, die in der thermischen Ausdehnung höher oder niedriger als Stahl sind, kann durch eine ausgeklügelte Mischung von Glasfasern und Kohlenstofffaserns im textilen Halbzeug - insbesondere einem textilen Halbzeug nach einer Ausführungsform der Erfindung - der thermische Ausdehnungskoeffizient, an den der metallischen Restkonstruktion angeglichen werden. Beispielsweise kann ein thermischer Ausdehnungskoeffizient, nahe dem von Stahl hergestellt werden. Dadurch werden Spannungen im fertigen Produkt die durch verschiedene Ausdehnungskoeffizienten entstehen, verringert.

Angleichung des thermischen Ausdehnungskoeffizienten erfolgen. Ziel hierbei ist beispielsweise

Im textilen Halbzeug liegen nach einer vorteilhaften Ausführungsform der Erfindung unterschiedliche Fasern in tangentialer Richtung vor.

Im textilen Halbzeug liegen nach einer vorteilhaften Ausführungsform der Erfindung unterschiedliche Fasern in radialer Richtung vor.

Im textilen Halbzeug liegen nach einer vorteilhaften Ausführungsform der Erfindung unterschiedliche Fasern und/oder Fasergemische in radialer und tangentialer Richtung vor.

Im textilen Halbzeug liegen nach einer vorteilhaften Ausführungsform der Erfindung gleiche Fasern und/oder Fasergemische in radialer und tangentialer Richtung vor.

Das textile Halbzeug liegt nach einer vorteilhaften Ausführungsform in Sandwichstruktur als Kombination mehrerer Laminate vor, wobei die Laminate gleich oder verschieden sein können.

Die vorliegende Erfindung bietet speziell auch die Möglichkeit, über eine Kombination unterschiedlicher Verstärkungsfasern wie Kohlenstofffasern und Glasfasern eine Stoff-und/oder Bauweise zu realisieren, bei der in dünnwandiger Ausführung zylindrisch, oval, wannenförmig und/oder sonst wie gebogene Bauteile als Verbundwerkstoff im Leichtbau herstellbar sind.

Im Folgenden wird die Erfindung noch anhand zweier Figuren, die beispielhafte Ausführungsformen der Erfindung zeigen, näher erläutert:
Figur 1 zeigt in schematischer Darstellung einen Ausschnitt der Anordnung der Fasern eines Ausführungsbeispiels der vorliegenden Erfindung
   und
Figur 2 zeigt eine Spirale mit mehreren Lagen aus einem textilen Halbzeug gemäß einem anderen Ausführungsbeispiel der vorliegenden Erfindung.

Figur 1 zeigt die scheibenförmige Projektion eines Lagerschildes 1 mit radial liegenden Fasern 2 und tangential liegenden Fasern 3. Zu erkennen sind ebenfalls die tangentialen Lastflusspfade 4 und die radialen Lastflusspfade 5 des Bauteils, hier eines Lagerschilds 1.

Figur 2 zeigt eine Ausführungsform eines textilen Halbzeugs 6 mit flächiger spiralförmig vorliegenden Fasern 7. Das textile Halbzeug 6 liegt in Form einer mehrlagigen Spirale vor. Diese Spirale 6 kann von oben und/oder unten und/oder seitlich mit Spacerschaum - nicht gezeigt - versehen sein, so dass sie - beispielsweise - mit einer weiteren Spirale in Sandwichstruktur verbunden werden kann, bevor sie zum Bauteil geformt und mit Reaktionsharz imprägniert wird.

Bei geeigneter Faserkombinationen und/oder Harzergänzungen können durch die vorliegende Erfindung Bauteile mit ausreichender Konstruktionsfestigkeit, Konstruktionssteifigkeit im Leichtbau verwirklicht werden. Die vorteilhafte Positionierung der Fasern im Lastfluss folgt hier dem Leichtbau-Grundgedanken, die Lasttragfähigkeit der eingesetzten Materialien möglichst effizient zu nutzen.

Stofflich sind alle Faserarten und Faserart-Kombinationen, ebenso wie alle Harz und Härter-Kombinationen, die im Leichtbau Anwendung finden, hier auch einsetzbar.

Die textilen Halbzeuge können auch beliebig mit der herkömmlichen 0°-90°- Art textiler Halbzeuge wie Gelegen, Geweben und/oder Längsfasern kombiniert in einem Leichtbauteil gemeinsam vorliegen. Der Zeitpunkt der Reaktionsharz-Injektion ist dabei beliebig während des Herstellungsprozesses. Es können auch zu verschiedenen Zeitpunkten Harzinjektionen erfolgen.

Durch die neue Art der Faserlegung in dem textilen Halbzeug kann eine deutliche Steigerung der Prozesseffizienz erreicht werden.

Durch die spezielle Art der textilen Faserlegung können Bauteile mit Rundungen, wie z.B. scheibenförmige, zylindrische, kreisförmige, ovale und/oder wannenförmige Bauteile, nahezu Verschnitt-frei produziert werden. Das bewirkt eine verbesserte Ökobilanz und reduziert die Kosten. Es wird außerdem eine lastflussgerechte Faserpositionierung bei den genannten Bauteilen ermöglicht.

Ein weiterer Vorteil ist eine vereinfachte Fertigung, da nicht darauf geachtet werden muss, wie verschiedene Gelege/Gewebe-Zuschnitte zueinander positioniert und fixiert sind. Optimalerweise kann ein textiles Halbzeug in Form einer Spirale eingesetzt werden, welcher über die passende Anzahl an Spiralwindungen und/oder Spirallagen die Bauteildicke bestimmt.

## Patentansprüche

1. Textiles Halbzeug, geeignet zur Herstellung eines Leichtbauteils durch Reaktionsharzzugabe, wobei die Fasern des textilen Halbzeugs zumindest zum Teil radial, kreisförmig und/oder tangential verlaufen.

2. Textiles Halbzeug nach Anspruch 1, das in Form einer mehrlagigen Spirale vorliegt.

3. Textiles Halbzeug nach einem der Ansprüche 1 oder 2, das zumindest ein Laminat aus zwei textilen Halbzeugen in Spiralform umfasst.

4. Textiles Halbzeug nach Anspruch 3, dass eine Schaum-und/oder Abstandsgewebekern-Komponente umfasst.

5. Textiles Halbzeug nach einem der vorstehenden Ansprüche, das Kohlenstofffasern umfasst.

6. Textiles Halbzeug nach Anspruch 5, das hochmodulige Kohlenstofffasern umfasst.

7. Textiles Halbzeug nach einem der vorstehenden Ansprüche, das Glasfasern umfasst.

8. Textiles Halbzeug nach einem der vorstehenden Ansprüche, das Glasfasern und Kohlenstoff-basierte Fasern im Verhältnis 1:1 umfasst.

9. Textiles Halbzeug nach einem der vorstehenden Ansprüche, wobei unterschiedliche Fasern im textilen Halbzeug vorliegen.

10. Textiles Halbzeug nach einem der vorstehenden Ansprüche, wobei unterschiedliche Fasern in radialer Richtung im textilen Halbzeug vorliegen.

11. Textiles Halbzeug nach einem der vorstehenden Ansprüche, wobei unterschiedliche Fasern in tangentialer Richtung im textilen Halbzeug vorliegen.

12. Textiles Halbzeug nach einem der vorstehenden Ansprüche, wobei die Fasern oder das Fasergemisch in tangentialer Richtung sich von den Fasern oder dem Fasergemisch in radialer Richtung im textilen Halbzeug unterscheiden.

13. Textiles Halbzeug nach einem der vorstehenden Ansprüche, wobei die Fasern oder das Fasergemisch in tangentialer Richtung und die Fasern oder das Fasergemisch in radialer Richtung im textilen Halbzeug gleich sind.

14. Textiles Halbzeug nach einem der vorstehenden Ansprüche, das in Sandwichstruktur als Kombination mehrerer Laminate vorliegt, wobei die Laminate gleich oder verschieden sind.

15. Bauteil herstellbar durch Imprägnieren mit duromeren Reaktionsharz aus einem textilen Halbzeug nach einem der Ansprüche 1 bis 14.

16. Elektrische rotierende Maschine, die ein Bauteil nach Anspruch 15 umfasst.

17. Verwendung eines textilen Halbzeugs nach einem der Ansprüche 1 bis 14 bei der Herstellung elektrischer rotierender Maschinen.

18. Elektrische rotierende Maschine nach Anspruch 17, die ein Elektromotor ist.

19. Elektrische rotierende Maschine nach Anspruch 17 oder 18, die ein Bauteil nach Anspruch 15 als Teil des Gehäuses umfasst.
